Europäisches Patentamt

European Patent Office

Office européen des brevets

(19)

(11) Numéro de publication: **0 193 435**
**B1**

(12) **FASCICULE DE BREVET EUROPEEN**

(45) Date de publication du fascicule du brevet:
**02.11.89**

(51) Int. Cl.⁴: **H02M 3/335**

(21) Numéro de dépôt: **86400219.1**

(22) Date de dépôt: **03.02.86**

(54) **Circuit de commande d'alimentation à découpage à démarrage automatique.**

(30) Priorité: **08.02.85 FR 8501823**

(43) Date de publication de la demande:
**03.09.86 Bulletin 86/36**

(45) Mention de la délivrance du brevet:
**02.11.89 Bulletin 89/44**

(84) Etats contractants désignés:
**DE FR IT**

(56) Documents cités:
**EP-A- 0 144 754**
**US-A- 4 400 767**

**ELECTRICAL DESIGN NEWS,**
**vol. 29, no. 18, 6 septembre 1984, pages 213-220, Boston, US; G. GATTAVARI: "Design custom power sources with switching-regulator chip"**

(73) Titulaire: **THOMSON-CSF, 51, Esplanade du Général de Gaulle, F-92800 Puteaux(FR)**

(72) Inventeur: **Sartre, Jean, THOMSON-CSF SCPI 19, avenue de Messine, F-75008 Paris(FR)**

(74) Mandataire: **Rinuy, Santarelli, 14, avenue de la Grande Armée, F-75017 Paris(FR)**

**Description**

La présente invention concerne les alimentations stabilisées dites alimentations à découpage.

Une alimentation à découpage fonctionne de la manière suivante : un enroulement primaire de transformateur reçoit un courant qui est par exemple issu d'un pont de redresseurs recevant l'énergie du réseau alternatif. Le courant dans le transformateur est haché par un commutateur (par exemple un transistor de puissance) placé en série avec l'enroulement primaire.

Un circuit de commande du transistor établit des créneaux périodiques de mise en conduction du transistor. Pendant la durée du créneau le passage du courant est autorisé ; en dehors du créneau, le passage du courant est interdit.

Sur un (ou plusieurs) enroulement secondaire du transformateur, on recueille alors une tension alternative. Celle-ci est redressée et filtrée pour aboutir à une tension continue qui est la tension continue de sortie de l'alimentation à découpage.

Pour stabiliser la valeur de cette tension continue, on agit sur le rapport cyclique de conduction périodique du commutateur, c'est-à-dire sur le rapport entre la durée de conduction et la durée de blocage dans une période de découpage.

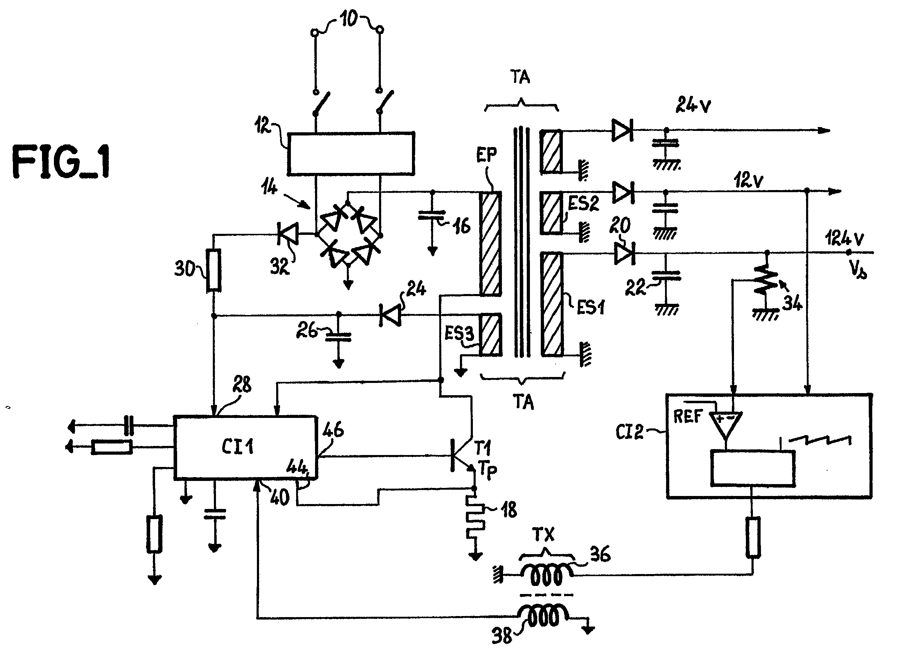

Dans une architecture d'alimentation à découpage proposée par la Demanderesse et représentée à la figure 1, deux circuits intégrés sont utilisés. L'un des circuit, CI1, sert à commander la base d'un transistor de puissance $T_p$ pour lui appliquer des signaux périodiques de commande de mise en conduction et de commande de blocage. Ce circuit de commande de base CI1 est placé du côté de l'enroulement primaire (EP) du transformateur (TA) pour des raisons que l'on comprendra mieux dans la suite de la description. L'autre circuit intégré, circuit de régulation CI2, est au contraire placé du côté du secondaire (enroulement ES1) et il sert à examiner la tension de sortie Vs de l'alimentation pour élaborer des signaux de régulation qu'il transmet au premier circuit intégré à travers un petit transformateur TX. Le premier circuit intégré CI1 utilise ces signaux de régulation pour modifier le rapport cyclique de mise en conduction du transistor de commutation $T_p$ et ainsi réguler la tension de sortie Vs de l'alimentation.

On reviendra plus en détail ci-après sur le circuit de la figure 1.

De nombreux problèmes sont à prendre en compte lors de la conception d'une alimentation à découpage, et on considère ici plus spécialement les problèmes de démarrage de l'alimentation et les problèmes de sécurité en cas de surtensions ou de surintensités en divers points du circuit.

Le premier problème que l'on rencontre est celui du démarrage de l'alimentation : lors de la mise sous tension, le circuit de régulation CI2 va tendre à faire engendrer par le circuit de commande de base CI1 des créneaux de rapport cyclique maximal jusqu'à ce que l'alimentation ait atteint sa tension nominale de sortie. Ceci est d'autant plus néfaste qu'il y a alors un fort appel de courant du côté des enroulements secondaires qui sont connectés à des condensateurs de filtrage initialement déchargés. Il y a risque de destruction du transistor de puissance par surintensité pendant la phase de démarrage.

On a déjà proposé des circuits de démarrage progressif qui limitent la durée des créneaux de mise en conduction pendant une phase de démarrage, à la mise sous tension du dispositif ; le brevet US 3 959 714 décrit un tel circuit dans lequel la charge d'une capacité à partir de la mise sous tension permet de définir des créneaux initialement courts et de durée progressivement croissante jusqu'à ce que ces créneaux atteignent la durée que leur assigne normalement le circuit de régulation. Les créneaux courts sont prioritaires ; mais, comme ils s'allongent progressivement pendant la phase de démarrage ils cessent au bout d'un certain temps d'être prioritaires ; ce temps est défini par la constante de temps de charge de la capacité.

Un autre problème qu'il faut prendre en compte est le risque de surintensités accidentelles, ou parfois de surtensions qui peuvent se produire dans le circuit. Ces surintensités et surtensions peuvent être très dommageables et aboutissent souvent à la destruction du transistor de puissance si rien n'est fait pour les éliminer. En particulier un court-circuit en sortie de l'alimentation stabilisée détruit rapidement le transistor de puissance. Si ce court-circuit se produit au démarrage de l'alimentation, ce n'est pas le système de démarrage progressif à créneaux courts et progressivement croissants qui peut permettre de prendre en compte de manière efficace les surintensités qui résultent de ce court-circuit.

Enfin, un autre problème, particulièrement important dans une architecture telle que celle de la figure 1, est le risque de disparition des signaux de régulation qui devraient être émis par le circuit de régulation CI2 et reçus par le circuit de commande de base CI1 : ces signaux déterminent non seulement la largeur des créneaux de mise en conduction du transistor de puissance mais aussi leur périodicité ; en d'autres mots ils servent à établir la fréquence de découpage, éventuellement synchronisée à partir d'un signal produit du côté du secondaire du transformateur. La disparition de ces signaux provoque une perturbation particulière dont il faut tenir compte.

D'ailleurs, l'architecture de la figure 1, dans laquelle on a volontairement séparé galvaniquement les circuits secondaires des circuits primaires, est telle que le circuit de commande de base peut fonctionner rapidement après la mise sous tension, comme on l'expliquera plus loin, alors que le circuit de régulation CI2 ne peut fonctionner que si l'alimentation à découpage fonctionne ; par conséquent, au départ le circuit de commande de base CI1 ne reçoit pas de signaux de régulation et il faut tenir compte de cette difficulté.

Pour essayer de résoudre au mieux l'ensemble de ces différents problèmes qui tournent autour de la sécurité contre les perturbations accidentelles du fonctionnement de l'alimentation (le démarrage initial pouvant d'ailleurs être considéré comme une phase transitoire de fonctionnement perturbé), la présente invention propose un circuit de commande d'alimentation à découpage perfectionné qui accomplit une fonction de démarrage progressif de l'alimentation à la mise sous tension et une fonction de passage en mode de sécurité en cas de défaut de fonctionnement tel qu'une disparition de signaux de régulation appropriés ; le mode de sécurité consiste en une succession de cycles périodiques à très basse fréquence, chaque cycle consistant en une tentative de démarrage progressif pendant une première phase courte devant la période du cycle et longue devant la période de découpage de l'alimentation à découpage, la première phase étant suivie d'une pause jusqu'à la fin du cycle, et les cycles périodiques se succédant jusqu'à établissement ou rétablissement d'un fonctionnement normal de l'alimentation ; un oscillateur à très basse fréquence établit ces cycles lorsque l'alimentation n'est pas en régime de fonctionnement normal (démarrage ou défaut de fonctionnement) ; cet oscillateur est bloqué en cas de constatation d'un fonctionnement normal ; un oscillateur à fréquence élevée engendre une salve de signaux de découpage palliant l'absence de signaux de régulation ; ces signaux sont transmis uniquement pendant la première phase de chaque cycle ; ils sont inhibés pendant la deuxième phase.

Selon une caractéristique très importante de l'invention, le démarrage progressif agit non pas en limitant la durée des créneaux à partir de la charge d'un condensateur avec une constante de temps fixe, mais en limitant le courant dans le transistor de puissance à une valeur maximale, cette valeur maximale croissant progressivement pendant la phase de démarrage, un dépassement de cette valeur de courant entrainant une interruption de la conduction du transistor de puissance.

Ainsi, même en cas de quasi court-circuit, on limite la valeur du courant dans le transistor, ce qui n'était pas le cas dans les circuits de démarrage progressif de la technique antérieure.

Plus précisément, le circuit de commande d'alimentation à découpage, destiné à recevoir des signaux de commande de régulation périodiques et à produire des créneaux périodiques de mise en conduction d'un commutateur principal de l'alimentation, les créneaux ayant une largeur variable en fonction des signaux de commande de régulation, comporte :

- un moyen de détection de la présence de signaux de commande de régulation,
- un oscillateur à très basse fréquence commandé par le moyen de détection, cet oscillateur établissant, en cas d'absence de signaux de régulation, une succession de cycles périodiques à très basse fréquence, l'oscillateur étant inhibé par le moyen de détection en présence de signaux de commande de régulation,
- un oscillateur à fréquence élevée produisant des signaux de découpage palliant l'absence de signaux de régulation pour la production de créneaux de mise en conduction,
- un moyen d'inhibition pour n'autoriser la transmission des signaux de découpage vers le commutateur que pendant une première phase de chaque cycle périodique à très basse fréquence et pour interdire cette transmission pendant le reste du cycle, la première phase de chaque cycle ayant une durée longue devant la période de l'oscillateur à fréquence élevée et courte devant la période de l'oscillateur à très basse fréquence.

De préférence, l'oscillateur à fréquence élevée a une période d'oscillation libre légèrement plus grande que la période des signaux de commande de régulation et il est synchronisé par ces signaux lorsqu'ils sont présents.

Les signaux de commande de régulation peuvent comprendre une impulsion positive suivie d'une impulsion négative, l'une d'elles servant à synchroniser l'oscillateur à fréquence élevée, l'impulsion positive étant transmise à travers le moyen d'inhibition à une entrée de basculement d'une bascule bistable pour déclencher la mise en conduction du commutateur, tandis que l'impulsion négative est transmise à l'entrée de rétablissement de cette bascule pour déclencher l'arrêt de la conduction.

En ce qui concerne la limitation du courant à une valeur progressivement croissante pendant les cycles de démarrage, on prévoit de préférence un comparateur à seuil (92) recevant un signal de mesure du courant dans le commutateur pour engendrer un signal d'arrêt de la conduction du commutateur en cas de dépassement du seuil et un moyen (90) pour faire varier le seuil du comparateur de la manière suivante:
– en fonctionnement normal le seuil est fixé à une première valeur;
– au début de la première phase de chaque cycle périodique à très basse fréquence le seuil passe brusquement de la première valeur à une deuxième valeur correspondant à un courant plus faible dans le commutateur;
– pendant la première phase de chaque cycle le seuil repasse progressivement de la deuxième valeur à la première.

Ce mode de limitation de courant est revendiqué séparément dans la demande parallèle EP 86 400 220 (EP-A 193 436).

D'autres caractéristiques et avantages de l'invention apparaîtront à la lecture de la description détaillée qui suit et qui est faite en référence aux dessins annexés dans lesquels:
la figure 1 représente un schéma général d'alimentation à découpage utilisant deux circuits intégrés placés respectivement du côté du primaire et du côté du secondaire d'un transformateur,
– la figure 2 représente un schéma du circuit intégré de commande du transistor de puissance placé du côté du primaire,
– les figures 3 à 6 représentent des diagrammes temporels de signaux en divers points du circuit,
– la figure 7 représente un détail de circuit, pour l'élaboration d'un seuil variable.

En revenant sur la figure 1 qui représente une architecture d'alimentation à découpage donnée à titre d'exemple illustrant bien l'utilité de l'invention, on a désigné la ligne du réseau public de distribution électrique par la référence 10 (secteur à 110 ou 220 volts, 50 ou 60 hertz). Cette ligne est reliée à travers un filtre 12 à l'entrée d'un pont redresseur 14 dont la sortie est connectée d'une part à une masse électrique primaire, représentée partout par un triangle noir pointe en bas, et d'autre part à une extrémité de l'enroulement primaire EP du transformateur d'alimentation TA.

Un condensateur de filtrage 16 est placé en parallèle sur les sorties du pont redresseur 14. L'autre extrémité de l'enroulement primaire est reliée au collecteur d'un transistor de commutation $T_p$ dont l'émetteur est relié à la masse primaire par l'intermédiaire d'une petite résistance 18 de mesure de courant.

Le transformateur possède plusieurs enroulements secondaires qui sont de préférence isolés galvaniquement du secteur et reliés par exemple à une masse électrique secondaire isolée galvaniquement de la masse primaire.

Ici, chacun des enroulements secondaires a une extrémité reliée à la masse secondaire. L'autre extrémité alimente un condensateur de filtrage passe-bas respectif par l'intermédiaire d'une diode de redressement respective.

On s'intéressera dans la suite à un seul enroulement secondaire ES1, relié par une diode 20 à un condensateur 22. La tension de sortie continue de l'alimentation à découpage est la tension Vs aux bornes du condensateur 22 ; mais bien entendu d'autres tensions continues de sortie peuvent être obtenues aux bornes des autres condensateurs de filtrage reliés aux enroulements secondaires. Ces tensions de sortie constituent des tensions d'alimentation stabilisées pour des circuits d'utilisation non représentés. A titre d'exemple, un enroulement secondaire ES2 fournit une tension d'alimentation stabilisée de quelques volts pour le circuit intégré de régulation CI2 dont on a déjà parlé. On vérifie donc à ce propos que ce circuit n'est pas alimenté et ne peut donc pas fournir de signaux tant que l'alimentation à découpage ne fonctionne pas.

Il en est de même a priori pour le circuit intégré CI1 de commande de base du transistor de puissance $T_p$, circuit qui est alimenté par une tension stabilisée fournie à partir d'un enroulement secondaire ES3, d'une diode 24 et d'un condensateur 26 (on remarquera en passant que cet enroulement, bien qu'étant un enroulement secondaire est relié à la masse primaire et non à la masse secondaire, ceci pour la raison bien simple que le circuit intégré CI1 est nécessairement couplé galvaniquement au primaire).

Cependant, comme il faut bien assurer un démarrage de l'alimentation à découpage, on prévoit que la borne d'alimentation 28 du circuit intégré CI1 est aussi reliée directement au secteur par l'intermédiaire d'une résistance élevée 30 et d'une diode 32 ; ceci est possible puisque le circuit intégré CI1 est relié à la masse primaire ; ce n'est pas possible pour le circuit intégré CI2 qui doit rester galvaniquement isolé du secteur. Dès que l'alimentation à découpage fonctionne normalement, la tension continue stabilisée issue de l'enroulement ES3 et de la diode 24 prend le pas sur la tension issue du secteur et de la diode 32 ; cette diode 32 se bloque et l'alimentation directe par le secteur n'intervient plus après la phase de démarrage initial.

On va maintenant préciser le rôle des circuits intégrés CI1 et CI2.

Le circuit de régulation CI2 reçoit d'un pont diviseur 34, placé aux bornes du condensateur 22 c'est-à-dire en sortie de l'alimentation stabilisée, une information sur la valeur de la tension à stabiliser Vs.

Cette information est comparée à une valeur de consigne et appliquée à un modulateur de largeur d'impulsions qui établit des créneaux périodiques de largeur variable en fonction de la valeur de la tension de sortie Vs : plus Vs est faible plus la largeur des créneaux sera grande.

Les créneaux sont établis à la fréquence de découpage de l'alimentation à découpage. Cette fréquence est donc établie du côté du secondaire du circuit ; elle est engendrée soit à l'intérieur du circuit CI2, soit à l'extérieur dans un circuit non représenté, sous forme d'une tension en dent de scie à la fréquence de découpage choisie. Cette tension en dent de scie est utilisée de manière connue pour effectuer la modulation de largeur.

Les créneaux de largeur variable, à la fréquence de découpage, sont appliqués à un enroulement primaire 36 d'un petit transformateur TX dont l'enroulement secondaire 38, isolé galvaniquement du primaire, fournit des impulsions positives et négatives aux fronts montants et descendants respectivement des créneaux de largeur variable.

Ce sont ces impulsions, de position et de fréquence déterminées par le circuit de régulation CI2, qui constituent des signaux de régulation appliqués à une entrée 40 du circuit de commande de base CI1.

Le transformateur TX est constitué par quelques spires de bobinage enroulées sur un bâtonnet de ferrite, les spires du primaire et les spires du secondaire étant suffisamment écartées les unes des autres pour respecter les normes d'isolation galvanique entre circuits primaires et circuits secondaires de l'alimentation à découpage.

Le circuit intégré de commande de base CI1 comporte diverses entrées parmi lesquelles on a déjà mentionné une entrée d'alimentation 28 et une entrée de signaux de régulation 40 ; une entrée de mesure de courant 44 est reliée à la résistance de mesure de courant 18 ; une entrée d'inhibition permettant de surveiller l'état de magnétisation d'un transformateur. Enfin, des entrées peuvent être prévues pour connecter des éléments (résistances, capacités) qui devraient faire partie du circuit intégré lui-même mais qui pour des raisons technologiques (encombrement) ou pour des raisons pratiques (possibilités de réglage par l'utilisateur) sont montés à l'extérieur.

Le circuit intégré CI1 comporte enfin une sortie 46 qui est destinée à être couplée par un couplage galvanique direct à la base du transistor de puissance $T_p$. Cette sortie fournit des créneaux de mise en conduction et de blocage du transistor $T_p$.

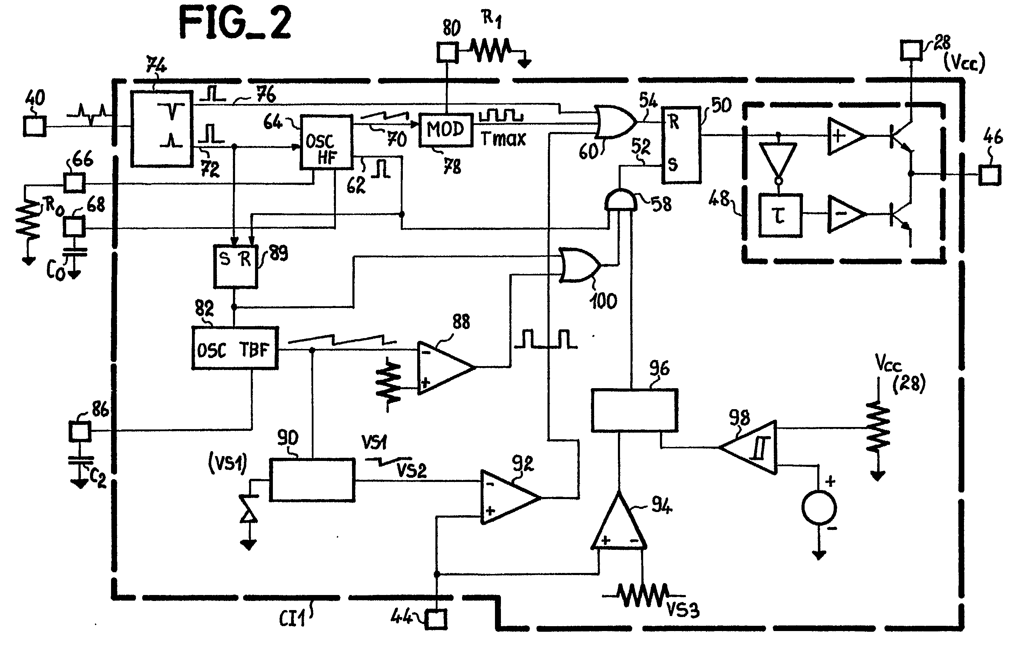

La figure 2 représente l'architecture générale du circuit intégré CI1, limitée aux éléments qui concernent plus spécialement l'invention.

La sortie 46 du circuit est la sortie d'un étage d'amplification push-pull globalement désigné par la référence 48, cet étage comprenant de préférence deux amplificateurs séparés dont l'un reçoit des créneaux de mise en conduction et l'autre reçoit des signaux de blocage constitués par les créneaux de mise en conduction inversés et retardés de quelques microsecondes. De tels amplificateurs sont maintenant bien connus.

Les signaux de mise en conduction sont issus d'une bascule logique 50 ayant une entrée de basculement 52 et une entrée de rétablissement 54. L'entrée de basculement permet le déclen- chement de la mise en conduction du transistor de puissance. L'entrée de rétablissement permet le déclenchement de l'arrêt de la conduction.

L'entrée de basculement 52 reçoit les impulsions qui passent à travers une porte logique ET 58, de sorte que le déclenchement de la conduction ne se produit que si plusieurs conditions sont simultanément satisfaites ; une condition non satisfaite suffira à inhiber le déclenchement de la conduction.

L'entrée de rétablissement 54 reçoit les impulsions qui passent à travers une porte logique OU 60, de sorte que l'arrêt de la conduction (après un déclenchement de conduction) se produira dès lors qu'un signal d'arrêt se présentera sur l'une des entrées de cette porte.

Sur le schéma de la figure 2, la porte ET 58 a trois entrées. L'une de ces entrées reçoit des impulsions périodiques issues d'une sortie 62 d'un oscillateur à haute fréquence 64 ; les autres entrées servent à inhiber la transmission de ces impulsions.

L'oscillateur définit la périodicité du découpage de l'alimentation (20 kilohertz par exemple). En régime de fonctionnement normal l'oscillateur est synchronisé par les signaux de régulation ; en régime de démarrage il est autooscillant à une fréquence libre définie par les valeurs d'une résistance Ro et d'une capacité $C_o$ extérieures au circuit intégré CI1 et respectivement connectées à une borne d'accès 66 et une borne d'accès 68. La fréquence libre fo est en principe légèrement plus faible que la fréquence de découpage normale.

L'oscillateur 64 est un oscillateur à relaxation qui produit sur une sortie 70 une dent de scie dont le retour à zéro est imposé par l'apparition d'une impulsion positive arrivant sur la borne 40. C'est pourquoi l'oscillateur 64 est représenté avec une entrée reliée à une sortie 72 d'un circuit de séparation et mise en forme 74 qui reçoit les signaux de régulation de la borne 40 et les met en forme en séparant les impulsions positives des impulsions négatives. Le circuit de mise en forme 74 a deux sorties : 72 pour les impulsions positives, 76 pour les impulsions négatives (on gardera la notation impulsion positive, impulsion négative pour distinguer les impulsions de déclenchement de la conduction et les impulsions d'arrêt de la conduction même si le circuit de mise en forme établit des impulsions de même signe sur ses deux sorties 72 et 76).

L'oscillateur 64 a deux sorties : une sortie 70 fournissant une dent de scie et une sortie 62 fournissant une impulsion courte lors du retour à zéro de la dent de scie.

Un modulateur de largeur d'impulsions 78 est relié d'une part à la sortie 70 de l'oscillateur et d'autre part à une tension de référence ajustable par une résistance R1 extérieure au circuit intégré et reliée à une borne 80 d'accès au circuit. Le modulateur 78 fournit des créneaux périodiques synchronisés avec les signaux de l'oscillateur, ces créneaux définissant une durée maximale de conduction Tmax au delà de laquelle le blocage du transistor de puissance doit être déclenché de toute façon par sécurité. Ces créneaux de modulateur 78 sont appliqués à une entrée de la porte OU 60. La durée Tmax est réglable par la résistance extérieure R1.

Les éléments qui viennent d'être décrits assurent l'essentiel du fonctionnement en régime normal du circuit intégré CI1. Les éléments suivants sont plus spécifiquement prévus pour contrôler le fonctionnement anormal ou le démarrage de l'alimentation.

Un oscillateur à très basse fréquence 82 est relié à une capacité extérieure C2 par une borne d'accès 86. Cette capacité extérieure permet de régler la très basse fréquence d'oscillation. La fréquence peut être de 1 hertz par exemple.

L'oscillateur 82 est un oscillateur à relaxation fournissant une dent de scie. Cette dent de scie est appliquée d'une part à un comparateur à seuil 88 qui permet d'établir des créneaux périodiques synchronisés sur la dent de scie à très basse fréquence de l'oscillateur. Ces créneaux ont une durée brève devant la période de la dent de scie ; cette durée est fixée par le seuil du comparateur 88 ; elle peut être par exemple de 10 % de la période ; elle doit être longue devant la période libre d'oscillation de l'oscillateur à haute fréquence 64 de manière qu'une salve de nombreuses impulsions de l'oscillateur haute fréquence puisse être émise et utilisée pendant ces dix pour cent de la période à très basse fréquence ; cette salve définit une tentative de démarrage pendant la première partie d'un cycle de démarrage ; elle est suivie d'une pause pendant le reste de la période c'est-à-dire pendant les 90 % restants.

L'oscillateur ne sert qu'au démarrage ; il est inhibé lorsque des signaux de régulation apparaissent sur la borne 40 et indiquent que l'alimentation à découpage fonctionne. C'est pourquoi on a représenté une commande d'inhibition de cet oscillateur, reliée à la sortie 72 du circuit de mise en forme 74 par l'intermédiaire d'une bascule bistable 89. Cette bascule change d'état sous l'action des impulsions apparaissant sur la sortie 72. Elle est ramenée à son état initial par la sortie 62 de l'oscillateur 64 lorsqu'il n'y a plus d'impulsions sur la sortie 71.

Les dents de scie de l'oscillateur à très basse fréquence sont par ailleurs transmises à un circuit 90 d'élaboration de seuil variable qui a pour fonction d'établir un signal de seuil (courant ou tension) ayant une première valeur Vs1 en régime de fonctionnement normal, et un seuil cycliquement variable entre la première valeur et une deuxième valeur en régime de démarrage. On détaillera plus loin le mode de variation de ce seuil, mais on peut déjà dire que la variation est pilotée par la dent de scie à très basse fréquence.

Le signal de seuil établi par le circuit 90 est appliqué à une entrée d'un comparateur 92 dont une autre entrée est reliée à la borne 44 déjà mentionnée, pour recevoir sur cette entrée un signal représentatif de l'amplitude du courant traversant le commutateur de puissance. La sortie du comparateur 92 est appliquée à une entrée de la porte OU 60. Elle agit donc pour déclencher le blocage du transistor de puissance $T_p$, après un déclenchement de conduction, le blocage se produisant dès la détection du dépassement du seuil (fixe ou variable) défini par le circuit 90.

Un autre comparateur à seuil 94 a une entrée reliée à la borne 44 de mesure de courant tandis qu'une autre entrée reçoit un signal représentant une troisième valeur de seuil Vs3. La troisième valeur Vs3 correspond à un courant dans le commutateur plus élevé que la première valeur Vs1 définie par le circuit 90. La sortie du comparateur 94 est reliée à travers une bascule de mémorisation 96 à une entrée de la porte ET 58 de sorte que si le courant dans le commutateur de puissance dépasse la troisième valeur de seuil Vs3, on ne déclenche pas un arrêt de la conduction du transistor $T_p$ (cet arrêt est déclenché par le comparateur 92) mais une inhibition de toute remise en conduction du transistor. Cette inhibition dure jusqu'à ce que la bascule 96 soit remise dans son état initial correspondant à un fonctionnement normal.

En principe ce rétablissement n'aura lieu que lorsque le circuit intégré CI1 aura cessé d'être alimenté normalement en énergie et sera à nouveau remis sous tension. Par exemple, le rétablissement de la bascule 96 se fait par l'intermédiaire d'un comparateur à seuil à hystérésis 98 qui compare une fraction de la tension d'alimentation Vcc du circuit (prélevée sur la borne 28) à une valeur de référence et qui rétablit la bascule lors du premier passage de Vcc au-dessus de cette référence après une chute de Vcc au-dessous d'une autre valeur de référence plus faible que la première (hystérésis).

Enfin, on peut préciser que la sortie de la bascule bistable 89 (qui détecte la présence de signaux de régulation sur la borne 40 donc le fonctionnement normal de l'alimentation), est reliée à une entrée d'une porte OU 100 qui reçoit sur une autre entrée la sortie du comparateur 88 pour que la sortie du comparateur 88 cesse d'inhiber la remise en conduction du transistor $T_p$ (inhibition pendant 90 % des cycles à très basse fréquence) dès que le fonctionnement de l'alimentation est devenu normal.

## FONCTIONNEMENT DU CIRCUIT DE COMMANDE DE BASE

Ce fonctionnement sera décrit en l'illustrant par des formes d'onde de tension à l'intérieur de l'alimentation à découpage et à l'intérieur du circuit intégré CI1.

### a) Démarrage à la mise sous tension

Au départ le circuit intégré n'est pas du tout alimenté.

La tension sur la borne d'alimentation 28 croît de zéro à une valeur Vaa qui n'est pas la valeur nominale Vcc mais qui est une valeur plus faible fournie par la diode 32 et la résistance 30 (cf. figure 1) tant que l'alimentation à découpage ne fournit pas sa tension nominale de sortie Vcc sur la borne 28. Vaa est une tension suffisante pour assurer un fonctionnement pratiquement normal de tous les éléments du circuit CI1. Vaa est également suffisante pour réinitialiser la bascule 96 qui, dès lors, n'inhibe plus la mise en conduction du transistor de puissance $T_p$.

Il n'y a pas de signaux de régulation sur l'entrée 40. Par conséquent, l'oscillateur haute fréquence oscille avec sa fréquence libre et l'oscillateur à très basse fréquence oscille également (il n'est pas inhibé par la bascule bistable 89 puisque celle-ci ne reçoit pas de signaux de régulation de la sortie 72 du circuit de mise en forme 74).

L'oscillateur très basse fréquence 82 et le comparateur 88 définissent des cycles périodiques de tentatives de démarrage répétées à très basse fréquence.

Chaque cycle comprend une première partie définie par les créneaux de courte durée en sortie du comparateur 88, et une deuxième partie constituée par la fin de la période très basse fréquence ; la première partie est une tentative effective de démarrage. La deuxième partie est une pause si la tentative effective a échoué. La pause dure beaucoup plus longtemps que la tentative effective de manière à limiter la consommation de puissance.

Pendant la première partie du cycle, le passage des signaux de mise en conduction issus de l'oscillateur haute fréquence 64 est autorisé par la porte ET 58. Il est interdit ensuite. Chaque impulsion issue de la sortie 62 de l'oscillateur 64 déclenche la mise en conduction du transistor $T_p$. Il y a donc une salve d'impulsions de déclenchement qui est émise pendant 10 % environ de la période à très basse fréquence.

Pendant le démarrage, les intensités de courant dans le transistor ont tendance à être élevées. C'est le comparateur 92 essentiellement qui assure l'interruption de la conduction, après chaque impulsion de mise en conduction fournie par l'oscillateur 64, dès que le courant dépasse le seuil imposé par le circuit d'élaboration de seuil variable 90. Si le comparateur 92 ne déclenche pas l'interruption de la conduction, le modulateur 78 le fera de toutes façons au bout de la durée Tmax.

Le circuit d'élaboration de seuil, qui fournit au comparateur 90 une première valeur de seuil fixe Vs1 en régime normal (c'est-à-dire lorsque l'oscillateur à très basse fréquence 82 est bloqué par la bascule 89), fournit un seuil variable en fonction de la dent de scie de l'oscillateur très basse fréquence de la manière suivante :

- à l'instant initial d'un cycle de tentative de démarrage (départ de la dent de scie ou retour à zéro de la précédente dent de scie), le seuil passe brusquement de la première valeur Vs1 à une deuxième valeur Vs2 correspondant à un courant plus faible que pour la première valeur, puis ce seuil croît progressivement (grâce au pilotage par la dent de scie très basse fréquence) de la deuxième valeur jusqu'à la première. La durée de croissance coïncide de préférence avec la durée d'un créneau de tentative de démarrage (soit environ 10 % de la période très basse fréquence).

Puis le seuil se stabilise à la première valeur Vs1 jusqu'à la fin de la période, mais de toutes façons, si le circuit n'a pas démarré à ce moment là, le comparateur 88 ferme la porte 58, à travers la porte OU 100 et inhibe tout déclenchement ultérieur de conduction du transistor de puissance pendant le reste de la période très basse fréquence (90 %). C'est alors la deuxième partie du cycle de tentatives de démarrages qui a lieu : pause pendant laquelle les impulsions de l'oscillateur 64 ne sont pas transmises par la porte ET 58.

Ainsi les cycles de démarrage agissent sur deux plans : d'une part une salve d'impulsions de mise en conduction est émise (10 % du temps) puis arrêtée (90 % du temps) jusqu'au cycle suivant ; d'autre part, pendant cette salve, le seuil de limitation de courant passe progressivement de sa deuxième valeur relativement basse à sa valeur normale plus haute.

Par conséquent, si l'on observe l'amplitude crête du courant dans le transistor $T_p$ pendant les salves de démarrage, on voit que pratiquement elle croît linéairement de la deuxième valeur à la première. On obtient donc un démarrage progressif par une action beaucoup plus efficace que celle qui consisterait simplement par exemple à faire croître la durée Tmax d'une faible valeur à une valeur nominale.

Si le démarrage ne réussit pas, une nouvelle salve d'impulsions de mise en conduction est transmise lors de la première partie du cycle suivant (on rappelle que ce cycle se répète environ une fois par seconde et que la salve peut durer 100 millisecondes).

Si le démarrage réussit, des signaux de régulation apparaissent sur la borne 40. Ces signaux sont mis en forme par le circuit 74. Ils viennent arrêter l'oscillateur très basse fréquence 82 par la bascule 89 qui empêche le retour à zéro de la dent de scie. Par ailleurs, la bascule 89 envoie à travers la porte OU 100 un signal propre à annuler l'effet d'inhibition imposé par le comparateur 88. Enfin, dès que le démarrage a réussi, les signaux de régulation viennent synchroniser l'oscillateur haute fréquence 64.

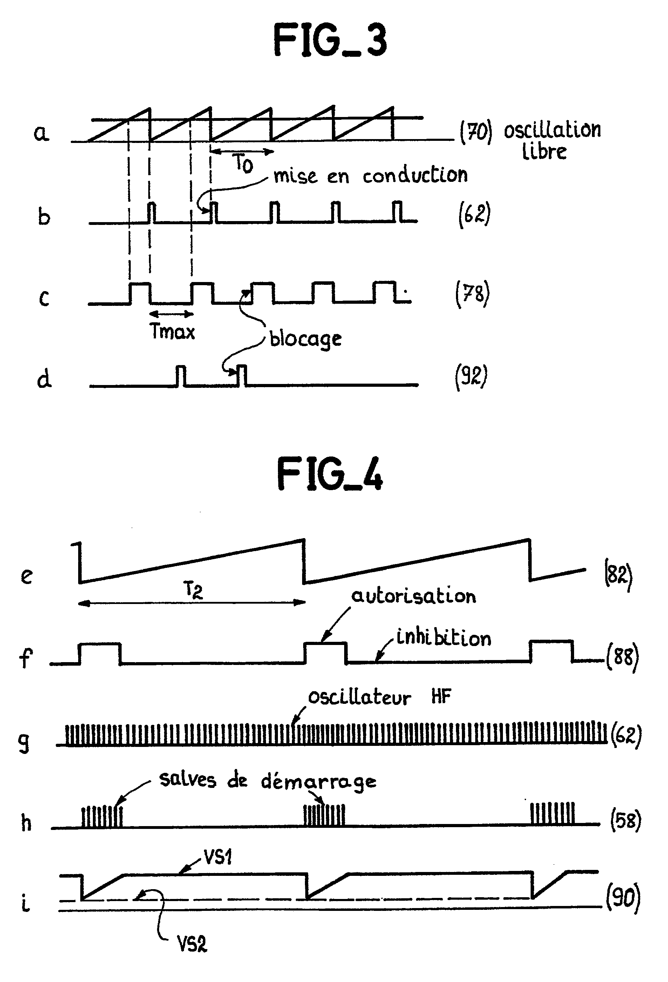

La figure 3 illustre les signaux à haute fréquence pendant les périodes de démarrage :

- ligne a : dent de scie sur la sortie 70 de l'oscillateur 64 (oscillation libre à fréquence fo, période To)
- ligne b : impulsions de déclenchement de la mise en conduction du transistor $T_p$ : ces impulsions coïncident avec le retour à zéro du signal en dent de scie (sortie 62 de l'oscillateur 64)
- ligne c : créneaux de sortie du modulateur 78 définissant la durée de conduction cyclique maximale du transistor
- ligne d : impulsions issues du comparateur 92 lorsque le courant dans le commutateur dépasse le seuil (progressivement croissant pendant le démarrage) défini par le circuit 90.

La conduction du transistor $T_p$, après un déclenchement par une impulsion de la ligne b, est arrêtée soit par les créneaux de la ligne c si le seuil de courant n'est pas dépassé, soit par une impulsion de sortie du comparateur 92.

La figure 4 représente les signaux à très basse fréquence pendant les cycles de démarrage. Les diagrammes ne sont pas à la même échelle temporelle qu'à la figure 3 puisqu'on rappelle qu'un exemple de fréquence de l'oscillateur haute fréquence 64 est 20 kilohertz tandis qu'un exemple de très basse fréquence de l'oscillateur 82 est 1 hertz. Les impulsions haute fréquence ont cependant été représentées symboliquement sur la figure 4, en nombre plus limité que dans la réalité pour faciliter la représentation.

- ligne e : sortie en dent de scie de l'oscillateur à très basse fréquence (fréquence f2, période T2)
- ligne f : sortie du comparateur 88 représentant la première phase (tentative de démarrage par autorisation de mise en conduction du transistor $T_p$) et la deuxième phase (pause par inhibition de la mise en conduction) de chaque cycle de démarrage à très basse fréquence,
- ligne g : impulsions issues de l'oscillateur haute fréquence en oscillation libre,
- ligne h : salves d'impulsions de mise en conduction en sortie de la porte ET 58,
- ligne i : diagramme de variation cyclique du seuil élaboré par le circuit 90 pendant les cycles de démarrage : valeur fixe Vs1 en principe, chute brusque à Vs2 au départ de la dent de scie à très basse fréquence, et remontée progressive de Vs2 à Vs1, pilotée par la croissance linéaire de la dent de scie, pendant la salve de démarrage.

b) Fonctionnement de l'alimentation en régime établi normal

L'oscillateur très basse fréquence ne fonctionne pas.

L'oscillateur haute fréquence est synchronisé par les signaux de régulation.

Le retour à zéro de la dent de scie haute fréquence, coïncidant avec les impulsions positives des signaux de régulation, déclenche la mise en conduction du transistor $T_p$ (pas d'inhibition par la porte ET 58 en régime de fonctionnement normal). Les impulsions négatives déclenchent l'arrêt de la conduction, à travers la porte OU 64, sauf si cet arrêt a déjà été déclenché :

- soit par un dépassement de la première valeur de seuil de courant, détecté par le comparateur 92,
- soit par le modulateur 78 si l'intervalle de temps entre l'impulsion positive et l'impulsion négative qui la suit immédiatement est supérieur à la durée maximale Tmax que l'on autorise.

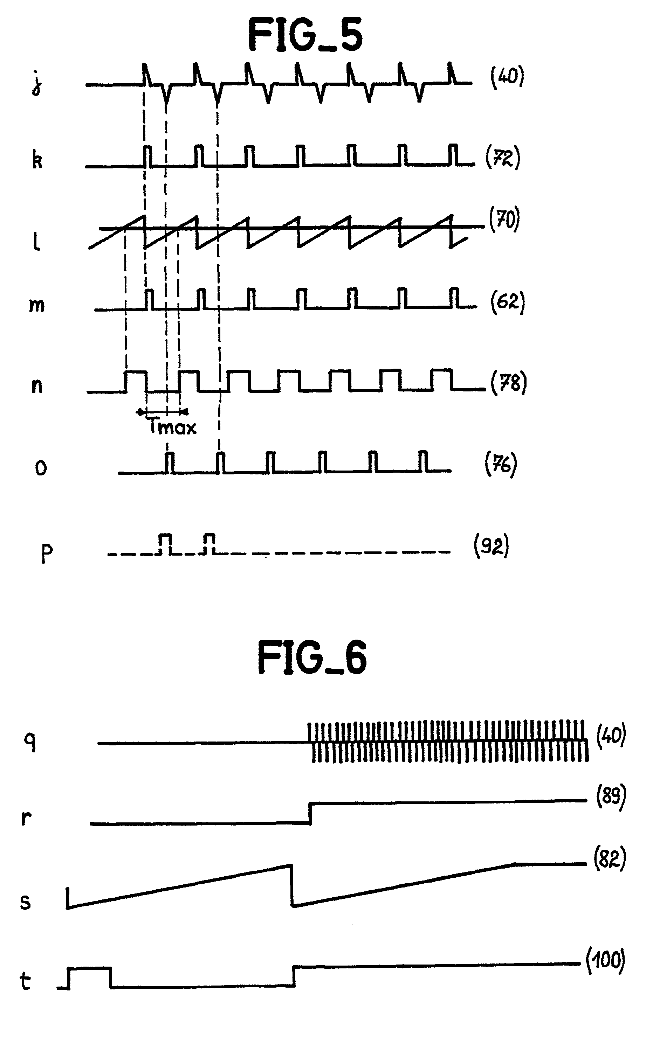

La figure 5 représente les signaux à haute fréquence en régime de fonctionement normal.

- ligne j : impulsions positives et négatives alternées reçues sur l'entrée 40 du circuit (ce sont les signaux de régulation définissant les instants de début et fin de conduction du transistor de puissance Tp),

- ligne k : impulsions mises en forme sur la sortie 72 du circuit de séparation et mise en forme 74 : elles correspondent aux impulsions positives seulement des signaux de régulation,
- ligne l : dent de scie sur la sortie 70 de l'oscillateur 64 ; la dent de scie est synchronisée sur les signaux de régulation en ce sens que son retour à zéro coïncide avec les impulsions de la ligne k,
- ligne m : impulsions sur la sortie 62 de l'oscillateur 64 ; ces impulsions sont émises lors des retours à zéro de la dent de scie de la ligne l,
- ligne n : créneaux de sortie de modulateur 78, définissant encore la durée maximale de conduction du transistor de puissance,
- ligne o : impulsions issues de la sortie 76 du circuit de séparation et mise en forme 74 : ces impulsions correspondent aux impulsions négatives des signaux de régulation,
- ligne p : pour mémoire, on a représenté des impulsions en sortie du comparateur 92 dans le cas où le courant dans le transistor de puissance dépasserait le seuil correspondant à Vs1.

La conduction du transistor Tp, après un déclenchement par une impulsion de la ligne k, est arrêtée normalement par l'impulsion de la ligne o qui la suit immédiatement, ou, de manière plus exceptionnelle par les impulsions de la ligne p si le seuil Vs1 est dépassé avant l'apparition et l'impulsion de la ligne o, ou encore, par les créneaux de la ligne n si le seuil n'est pas dépassé et si l'impulsion de la ligne o apparaît après le début d'un créneau de la ligne n.

La figure 6 représente les signaux à très basse fréquence au moment du passage d'un régime de démarrage à un régime de fonctionnement normal (même échelle qu'à la figure 4).

- ligne q : signaux de régulation sur l'entrée 40 ; ces signaux sont initialement absents et apparaissent à un certain moment,
- ligne r : sortie de la bascule bistable 89 indiquant l'absence puis la présence de signaux de régulation,
- ligne s : dent de scie très basse fréquence qui monte jusqu'à son niveau haut et ne redescend pas si la sortie de la bascule bistable 89 est au niveau haut (indiquant la présence de signaux de régulation),
- ligne t : sortie de la porte OU 100 montrant initialement un créneau de courte durée, issu du comparateur 88 et autorisant une salve de démarrage (cf. figure 4), puis un blocage au niveau haut qui empêche une inhibition ultérieure de la porte ET 58 par le comparateur 88.

## c) Mode de sécurité en cas d'incident de fonctionnement

Le mode de sécurité consiste en fait à établir des cycles de démarrage comme lors de la mise sous tension.

Ces cycles sont déclenchés par une remise en route de l'oscillateur 82 à très basse fréquence lorsque les signaux de régulation disparaissent à l'entrée 40.

La bascule bistable 89 repasse dans un état initial lorsqu'elle ne reçoit plus d'impulsions de la sortie 72 du circuit de séparation et mise en forme 74. De ce fait l'oscillateur 82 va pouvoir osciller à nouveau et les cycles décrits ci-dessus s'établissent.

## d) Incident grave : surintensité très importante

Quel que soit le régime de fonctionnement, normal ou démarrage, les surintensités dans le transistor Tp sont détectées par le comparateur 92 et déclenchent l'interruption de la conduction.

Mais s'il y a par exemple un court-circuit en sortie de l'alimentation, il peut se produire une surintensité telle que le courant continue à croître avant que la conduction n'ait le temps d'être complètement interrompue. Dans ce cas, on prévoit que le comparateur à seuil 94 fournit un ordre d'inhibition de la remise en conduction lorsque le courant dans le transistor Tp dépasse une troisième valeur de seuil qui est par exemple supérieure de 30 % à la première valeur. Cet ordre d'inhibition est mémorisé par la bascule 96 qui bascule sous l'action du comparateur et bloque la porte ET 58 ; la bascule 96 ne peut revenir à son état initial que lorsque le circuit intégré, après avoir partiellement ou totalement cessé d'être alimenté, est à nouveau alimenté normalement. Par exemple il faut débrancher et remettre sous tension l'alimentation pour autoriser à nouveau le passage d'impulsions de mise en conduction du transistor Tp.

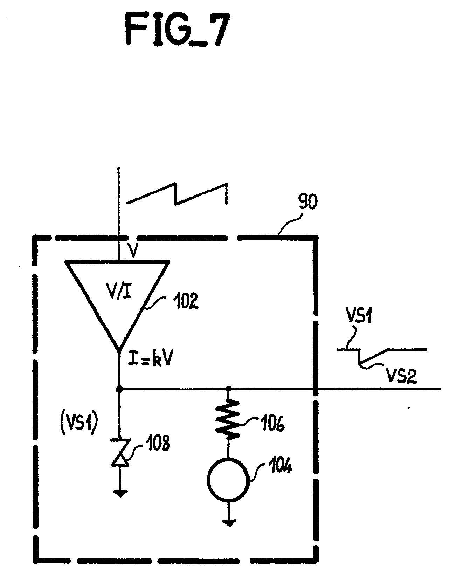

Pour terminer cette description, on a représenté à la figure 7 un exemple de schéma de principe du circuit 90 qui élabore un seuil variable pour le comparateur 92 : la dent de scie très basse fréquence issue de l'oscillateur est appliquée à un convertisseur tension/courant 102 qui élabore un courant croissant en dent de scie depuis zéro jusqu'à une valeur maximale.

Ce courant est appliqué à un ensemble en série d'une source de tension 104 (valeur Vs2) et d'une résistance 106. Un écrêteur de tension, représenté par une diode zener 108 (valeur du seuil de conduction : Vs1) est placé en parallèle sur l'ensemble 104, 106. Le point de jonction entre la sortie du convertisseur 102, la résistance 106 et l'écrêteur 108 constitue la sortie du circuit 90 et est relié à l'entrée du comparateur 92. Ainsi, lors du retour à zéro de la dent de scie, la tension de sortie du circuit 90 est Vs2. Puis elle croît à mesure que croît (linéairement) le courant dans la résistance 106. Lorsque la tension aux bornes de la résistance 106 atteint et dépasse la valeur Vs1-Vs2, l'écrêteur conduit et dérive le surplus de courant de sorte que la tension de sortie reste limitée à Vs1.

## Revendications

1. Circuit de commande d'alimentation à découpage (CI1), destiné à recevoir des signaux de commande de régulation périodiques et à produire des créneaux périodiques de mise en conduction d'un commutateur principal (Tp) de l'alimentation, les créneaux ayant une largeur variable en fonction des signaux de commande de régulation, caractérisé en ce qu'il comporte :
- un moyen de détection de la présence de signaux de commande de régulation (74, 89),
- un oscillateur à très basse fréquence (82) commandé par le moyen de détection, cet oscillateur établissant, en cas d'absence de signaux de régulation, une succession de cycles périodiques à très basse fréquence, l'oscillateur étant inhibé par le moyen de détection de signaux de commande de régulation,
- un oscillateur à fréquence élevée (64) produisant des signaux de découpage palliant l'absence de signaux de régulation pour la production de créneaux de mise en conduction,
- un moyen d'inhibition (88, 58) pour n'autoriser la transmission des signaux de découpage vers le commutateur que pendant une première phase de chaque cycle périodique à très basse fréquence et pour interdire cette transmission pendant le reste du cycle, la première phase de chaque cycle ayant une durée longue devant la période de l'oscillateur à fréquence élevée (64) et courte devant la période de l'oscillateur à très basse fréquence (82).

2. Circuit de commande selon la revendication 1, caractérisé en ce que l'oscillateur à fréquence élevée a une période d'oscillation libre légèrement plus grande que la période des signaux de commande de régulation et en ce qu'il est synchronisé par ces signaux lorsqu'ils sont présents.

3. Circuit de commande selon la revendication 1, caractérisé en ce que les signaux de commande de régulation comprennent une impulsion positive suivie d'une impulsion négative, l'une d'elle étant utilisée pour synchroniser l'oscillateur à fréquence élevée, l'impulsion positive étant transmise à travers le moyen d'inhibition (58) à une entrée de basculement (S) d'une bascule bistable (50) pour déclencher le début de la mise en conduction du commutateur principal, et l'impulsion négative étant transmise à une entrée de rétablissement (R) de la bascule (50) pour déclencher l'arrêt de la conduction du commutateur.

4. Circuit de commande selon la revendication 1, caractérisé en ce qu'il est prévu un comparateur à seuil (92) recevant un signal de mesure du courant dans le commutateur (Tp) pour engendrer un signal d'arrêt de la conduction du commutateur en cas de dépassement du seuil et un moyen (90) pour faire varier le seuil du comparateur de la manière suivante :
- en fonctionnement normal le seuil est fixé à une première valeur ($V_{S1}$) ;
- au début de la première phase de chaque cycle périodique à très basse fréquence le seuil passe brusquement de la première valeur à une deuxième valeur ($V_{S2}$) correspondant à un courant plus faible dans le commutateur ;
- pendant la première phase de chaque cycle le seuil repasse progressivement de la deuxième valeur à la première.

5. Circuit de commande selon la revendication 4, caractérisé en ce que l'oscillateur à très basse fréquence (82) est un oscillateur à relaxation fournissant un signal en dent de scie, et en ce que le moyen (90) pour faire varier le seuil est piloté par la sortie de l'oscillateur à très basse fréquence (82).

6. Circuit de commande selon l'une des revendications 4 et 5, caractérisé en ce qu'il est prévu un autre comparateur à seuil (94) recevant un signal de mesure du courant dans le commutateur principal et fournissant un signal d'inhibition complète de la mise en conduction du commutateur (Tp) lorsque le courant dans le commutateur dépasse une troisième valeur ($V_{S3}$) de seuil supérieure à la première valeur ($V_{S1}$).

7. Circuit de commande selon la revendication 6, caractérisé en ce que le signal d'inhibition fourni par l'autre comparateur (94) est annulé lorsque le circuit, après avoir cessé partiellement ou totalement d'être alimenté en énergie, est à nouveau normalement alimenté.

**Patentansprüche**

1. Steuerschaltung (CI1) für eine geschaltete Stromversorgungsschaltung, die dazu dient, periodische Regel-Befehlssignale zu empfangen und periodische Rechteckssignale zu erzeugen, durch die ein Versorgungs-Hauptschalter (Tp) leitend gemacht wird, wobei die Rechteckssignale eine Breite besitzen, die in Abhängigkeit von den Regel-Befehlssignalen veränderlich ist, dadurch gekennzeichnet, daß sie folgende Bestandteile umfaßt:
– Eine Erkennungseinrichtung (74, 89) zum Feststellen des Vorhandenseins der Regel-Befehlssignale,
– einen Oszillator (82) mit sehr niederer Frequenz, der von der Erkennungseinrichtung gesteuert wird und der dann, wenn keine Regelsignale vorhanden sind, eine Folge von periodischen Zyklen mit sehr niederer Frequenz erzeugt, wobei der Oszillator durch die Erkennungseinrichtung für die Regel-Befehlssignale gesperrt wird,
– einen Oszillator (64) mit hoher Frequenz, der Zerhackersignale erzeugt, die die Zeiträume ausfüllen, in denen die Regelsignale fehlen, um die Rechteckssignale zum Leitendmachen zu erzeugen, und
– eine Sperreinrichtung (88, 58), die dazu dient, die Übertragung von Zerhackersignalen zum Schalter nur während einer ersten Phase eines jeden periodischen Zyklus mit sehr niederer Frequenz zuzulassen und diese Übertragung während des Rests des Zyklus zu sperren, wobei die erste Phase eines jeden Zyklus eine zeitliche Länge besitzt, die groß ist im Vergleich zur Periode des Oszillators (64) mit hoher Frequenz, und die klein ist im Vergleich mit der Periode des Oszillators (82) mit sehr niederer Frequenz.

2. Steuerschaltung nach Anspruch 1, dadurch gekennzeichnet, daß der Oszillator mit hoher Frequenz eine freie Oszillationsperiode besitzt, die etwas größer ist als die Periode der Regel-Befehlssignale, und daß er mit diesen Signalen synchronisiert ist, wenn sie vorhanden sind.

3. Steuerschaltung nach Anspruch 1, dadurch gekennzeichnet, daß die Regel-Befehlssignale einen positiven Impuls umfassen, auf den ein negativer Impuls folgt, wobei einer dieser Impulse verwendet wird, um den Oszillator mit hoher Frequenz zu synchronisieren, und wobei der positive Impuls durch die Sperreinrichtung (58) hindurch an den Kippeingang (S) eines Flip-Flops (50) übertragen wird, um den Anfang des Leitendmachens des Hauptschalters auszulösen, während der negative Impuls an einen Rücksetzeingang (R) des Flip-Flops (50) übertragen wird, um die Beendigung des Leitens des Schalters auszulösen.

4. Steuerschaltung nach Anspruch 1, dadurch gekennzeichnet, daß ein Schwellenwert-Komparator (92) vorgesehen ist, der ein Meßsignal für den Strom im Schalter (Tp) empfängt, um ein das Leiten des Schalters beendendes Signal dann zu erzeugen, wenn der Schwellenwert überschritten wird, und daß eine Einrichtung (90) vorgesehen ist, die dazu dient, den Schwellenwert des Komparators in folgender Weise zu verändern:
- Im Normalbetrieb ist der Schwellenwert auf einen ersten Wert ($V_{S1}$) festgelegt,
- am Anfang der ersten Phase eines jeden periodischen Zyklus mit sehr niederer Frequenz geht der Schwellenwert sehr schnell vom ersten Wert auf einen zweiten Wert ($V_{S2}$) über, der einem wesentlich schwächeren Strom im Schalter entspricht, und
- während der ersten Phase eines jeden Zyklus kehrt der Schwellenwert in fortschreitender Weise vom zweiten Wert zum ersten Wert zurück.

5. Steuerschaltung nach Anspruch 4, dadurch gekennzeichnet, daß der Oszillator (82) mit sehr niederer Frequenz ein Kippschwingungsoszillator ist, der ein Sägezahnsignal liefert, und daß die Einrichtung (90), die zur Veränderung des Schwellenwertes dient, durch das Ausgangssignal des Oszillators (82) mit sehr niederer Frequenz gesteuert wird.

6. Steuerschaltung nach einem der Ansprüche 4 und 5, dadurch gekennzeichnet, daß ein weiterer Schwellenwert-Komparator (94) vorgesehen ist, der ein Meßsignal für den Strom im Hauptschalter empfängt und ein Signal für eine vollständige Verhinderung des Leitendmachens des Schalters (Tp) erzeugt, wenn der Strom im Schalter einen dritten Schwellenwert ($V_{S3}$) übersteigt, der größer als der erste Wert ($V_{S1}$) ist.

7. Steuerschaltung nach Anspruch 6, dadurch gekennzeichnet, daß das durch den weiteren Komparator (94) gelieferte Sperrsignal annulliert wird, wenn die Schaltung, nachdem sie aufgehört hat, teilweise oder vollständig mit Energie versorgt zu werden, aufs neue in normaler Weise versorgt wird.

**Claims**

1. Control circuit for a switching mode power supply (Cl1), adapted to reveive periodic regulation control signals and to produce periodic pulses for turning on a main switch (Tp) of the power supply, the pulses having a width variable as a function of the regulation control signals, characterised in that it comprises:

- means (74, 89) for detecting the presence of regulation control signals,
- a very low frequency oscillator (82) controlled by the detection means, this oscillator establishing, in the event of absence of regulation signals, a succession of periodic cycles at very low frequency, the oscillator being inhibited by the regulation control signal detection means,
- a high frequency oscillator (64) producing switching signals compensating for the absence of regulation signals for the production of switching pulses,
- inhibiting means (88, 158) for authorising transmission of switching signals to the switch during only a first phase of each periodic cycle at very low frequency and for prohibiting such transmission during the remainder of the cycle, the first phase of each cycle having a duration that is long in comparison with the period of the high frequency oscillator (64) and short in comparison with the period of the very low frequency oscillator (82).

2. Control circuit according to claim 1 characterised in that the high frequency oscillator has a free oscillation period that is slightly greater than the period of the regulation control signals and is synchronised by these signals when they are present.

3. Control circuit according to claim 1 characterised in that the regulation control signals comprise a positive pulse followed by a negative pulse, one of them being used to synchronise the high frequency oscillator, the positive pulse being transmitted through the inhibiting means (58) to a set input (S) of a bistable flip-flop (50) to trigger the start of turning on of the main switch and the negative pulse being transmitted to a reset input (R) of the flip-flop (50) to trigger the turning off of the switch.

4. Control circuit according to claim 1 characterised in that there is provided a threshold comparator (92) receiving a signal representative of the current in the switch (Tp) to generate a signal for turning off the switch if the threshold is exceeded and means (90) for varying the comparator threshold in the following manner:
in normal functioning the threshold is fixed at a first value ($V_{S1}$);
- at the start of the first phase of each periodic cycle at very low frequency the threshold changes suddenly from the first value to a second value ($V_{S2}$) corresponding to a lower current in the switch;
- during the first phase of each cycle the threshold changes progressively from the second value to the first.

5. Control circuit according to claim 4 characterised in that the very low frequency oscillator (82) is a relaxation oscillator supplying a sawtooth signal and in that the means (90) for varying the threshold are controlled by the output of the very low frequency oscillator (82).

6. Control circuit according to claim 4 or claim 5 characterised in that there is provided another threshold comparator (94) receiving a signal representative of the current in the main switch and supplying a signal for completely inhibiting the turning on of the switch (Tp) if the current in the switch exceeds a third threshold value ($V_{S3}$) higher than the first value ($V_{S1}$).

7. Control circuit according to claim 6 characterised in that the inhibiting signal supplied by the other comparator (94) is cancelled when the circuit is energised normally again after the supply of energy to it has been partially or totally interrupted.

FIG_1

EP 0 193 435 B1

FIG_2

EP 0 193 435 B1

# FIG_3

a — (70) oscillation libre

$T_0$ — mise en conduction

b — (62)

c — (78)

Tmax — blocage

d — (92)

# FIG_4

e — (82)

$T_2$ — autorisation — inhibition

f — (88)

oscillateur HF

g — (62)

salves de démarrage

h — (58)

VS1

i — (90)

VS2

# FIG_5

j     (40)

k     (72)

l     (70)

m     (62)

n     (78)

Tmax

O     (76)

P     (92)

# FIG_6

q     (40)

r     (89)

s     (82)

t     (100)